# DEMANDE DE BREVET EUROPEEN

(11) **EP 1 816 106 A1**
(43) Date de publication de la demande: **08.08.2007**
(21) Numéro de dépôt: 06101321.5
(22) Date de dépôt: 06.02.2006
(51) Int. Cl.: C02F 1/467

(54) **Procédé de traitement d'une solution aqueuse par électrolyse.**

(71) Demandeur: Delannoy, M. Vincent, 7911 Oeudeghien (BE); Istace, Pierre-Luc, 7760 Celles (BE)
(72) Inventeur: Delannoy, M. Vincent, 7911 Oeudeghien (BE); Istace, Pierre-Luc, 7760 Celles (BE)
(74) Mandataire: Van Straaten, Joop

(57) **Abrégé**

L'invention concerne un procédé de traitement d'une solution aqueuse comprenant du chlorure de sodium et contenue dans un réservoir, telle une piscine, ou dans un circuit comprenant une étape d'électrolyse, entre deux électrodes dont les bornes sont espacées l'une de l'autre d'une distance donnée, de la solution aqueuse produisant simultanément des dérivés chlorés, destinés à produire du chlore, et des dérivés oxygénés, destinés à produire des dérivés peroxydés. Le procédé est caractérisé en ce que la teneur en chlorure de sodium dans la solution aqueuse est maintenue à une valeur inférieure à 2000 ppm; la tension appliquée aux bornes des électrodes est inférieure à 9 volts; et la distance entre les bornes des électrodes est inférieure à 5 millimètres. L'invention concerne aussi un électrolyseur selon le même principe et un réservoir comprenant un tel électrolyseur.

## Description

L'invention concerne le traitement de l'eau en général et plus particulièrement le traitement de désinfection des eaux de piscines, des bassins de plaisance et des circuits d'eau de réfrigération par un procédé électrolytique. De tels procédés génèrent généralement *in situ* des solutions oxydantes à base d'hypochlorite de sodium à partir de solutions plus ou moins diluées en chlorure de sodium. L'hypochlorite de sodium se transforme ensuite en acide hypochloreux dans les gammes de pH considérées (7,0 à 7,6), faisant office de principe actif généralement dénommé chlore actif ou libre. De nombreux procédés classiques de traitement de l'eau existent et consistent en un traitement par des solutions oxydantes à base soit de dérivés chlorés tels le chlore gazeux ou liquide, l'hypochlorite de sodium, l'acide hypochloreux, l'acide trichloroisocyanurique, ou de dérivés oxygénés tels l'ozone ou le peroxyde d'hydrogène.

L'invention se rapporte en particulier à un procédé de traitement d'une solution aqueuse comprenant un sel halogéné, tel que le chlorure de sodium, et contenue dans un réservoir, telle une piscine, ou dans un circuit, ouvert ou fermé, comprenant une étape d'électrolyse, entre des électrodes espacées l'une de l'autre d'une distance donnée, l'électrolyse de la solution aqueuse produisant simultanément des dérivés chlorés (comme par exemple de l'hypochlorite de sodium) et des dérivés oxygénés (par exemple de l'ozone ou le peroxyde d'hydrogène).

L'invention concerne également un électrolyseur pour le traitement d'une solution aqueuse comprenant un sel halogéné, tel que du chlorure de sodium, et contenue dans un réservoir, telle une piscine, ou dans un circuit comprenant des moyens de réalisation d'une électrolyse de la solution, comprenant des électrodes espacées l'une de l'autre d'une distance donnée, apte à entraîner la production simultanée de dérivés chlorés et de dérivés oxygénés.

### État de la technique

On connaît de tels procédés.

Le brevet GB 1279020 divulgue un procédé de traitement d'une solution ou milieu chloré par électrolyse entre des électrodes espacées, où le chlore est généré dans cette solution ou milieu et est accompagné de radicaux oxygène libre et d'ozone.

De tels procédés requièrent des tensions relativement élevées aux concentrations en chlorure de sodium considérées (GB 1279020 indique 14 volts pour 3000 ppm chlorure, 20 volts pour 200 ppm), donc des appareils de puissance relativement élevées et donc relativement onéreux en terme d'investissement et de coût de fonctionnement.

### Résumé de l'invention

Un but de l'invention est de fournir un procédé plus performant et donc moins coûteux pour la génération simultanée de chlore et d'ozone.

Dans le cadre de cette invention, il sera question de chlore et dérivés chlorés obtenus par électrolyse à partir de chlorure de sodium. Il est bien entendu que cette invention vaut également pour des halogènes comme le chlore ou le brome et de dérivés halogénés, obtenus à partir de l'électrolyse d'halogénures de sel de sodium, potassium ou calcium. Pour simplifier, l'essentiel de cette description ne mentionnera que le chlore et les dérivés chlorés obtenus à partir de chlorure de sodium, tout en gardant en mémoire que d'autres sels halogénés conviennent également.

A cette fin, le procédé selon l'invention est caractérisé en ce que (i) la teneur en sel halogéné dans la solution aqueuse est maintenue à une valeur inférieure à 2000 ppm; (ii) la tension appliquée aux bornes des électrodes est comprise entre 2,35 et 9 volts; et (iii) la distance entre les bornes des électrodes est inférieure à 5 millimètres.

A cette fin également, l'électrolyseur selon l'invention est caractérisé en ce que (i) la teneur en sel halogéné dans la solution aqueuse est maintenue à une valeur inférieure à 2000 ppm; (ii) la tension appliquée aux bornes des électrodes est comprise entre 2,35 volts et 9 volts; et (iii) la distance entre les bornes des électrodes est inférieure à 5 millimètres.

L'état de la technique ne laissait en rien présager qu'il serait possible de produire simultanément des dérivés chlorés et des dérivés oxygénés en quantités efficaces pour le traitement de l'eau, avec des teneurs en sel halogéné très basses, à des tensions très basses et avec un écartement des électrodes très faible.

La faible teneur en sel halogéné, tel que le chlorure de sodium, dans le procédé selon l'invention, c'est-à-dire une teneur inférieure à 2000 ppm, a pour effet favorable de provoquer simultanément, d'une part, l'électrolyse du sel halogéné, tel que le chlorure de sodium, entraînant la production de chlore actif qui se dissout instantanément pour former de l'acide hypochloreux agissant en tant qu'agent désinfectant, et d'autre part, l'électrolyse de l'eau, entraînant la production d'oxygène en partie sous forme radicalaire qui peut agir directement sur les composés chloroaminés indésirables ou se transformer soit en ozone, voire en peroxyde d'hydrogène qui réagissent également avec les composés chloroaminés.

Plus précisément, il a été observé qu'une baisse de la teneur en sel halogéné, tel que le chlorure de sodium, s'accompagne d'une augmentation de la surtension anodique responsable de la réaction d'oxydation du chlorure en chlore, et entraine une augmentation du potentiel d'oxydation de l'électrode (autrement dit, on augmente le potentiel anodique). Ce potentiel devient alors suffisamment élevé pour induire l'oxydation d'autres éléments présents à savoir l'eau (ou plus exactement les anions hydroxyle) pour former de l'oxygène. En d'autres termes, une compétition est induite entre l'électrolyse du sel et l'électrolyse de l'eau qui ont lieu simultanément.

En revanche, l'abaissement de la teneur en sel halogéné, tel que le chlorure de sodium, a pour effet défavorable d'augmenter également la résistivité de l'eau. L'augmentation de la surtension anodique et l'augmentation de la résistivité de l'eau ont pour effet d'augmenter la tension entre les électrodes pour un courant d'électrolyse donné. Ceci nécessite donc des appareils de plus fortes puissances tout en augmentant les pertes par effet Joule.

Rapprocher les électrodes à une distance inférieure à 5 millimètres permet de réduire cette tension sous 9 volts, de limiter la puissance nécessaire des appareils (donc les coûts) et de limiter les surchauffes locales par effet Joule, tout en conservant la production simultanée recherchée. Le procédé est donc moins coûteux.

Le procédé est optimisé pour une distance entre les bornes des électrodes inférieure à 3 millimètres, et en particulier comprise entre 1 et 3 millimètres, voire en plus particulier entre 1 et 2 millimètres.

Les générateurs de ce type sont soit situés dans le circuit principal de traitement des eaux de piscines, soit dans un circuit secondaire. De manière générale, les procédés électrolytiques sont mis en fonctionnement en mode tout ou rien et à production constante de dérivés chlorés et de dérivés oxygénés, selon des durées prédéterminées dans des programmes préétablis. Une fois le programme choisi par l'opérateur, le système va donc avoir une production journalière constante de dérivés chlorés et de dérivés oxygénés, avec dans certains cas une légère correction automatique de la durée en fonction de la température de l'eau.

La production journalière constante (à la correction de température près) comporte le désavantage suivant. Plusieurs facteurs interviennent dans la consommation des agents oxydants ou désinfectants, quels qu'ils soient : la température de l'eau, le volume de la piscine et l'interface liquide/air, l'air ambiant, la ventilation, l'ensoleillement, mais aussi et surtout le nombre de nageurs. En conséquence, pour un programme prédéfini par l'opérateur, s'il y a un surnombre de nageurs (arrivée d'école en piscine publique, barbecue avec invitation de beaucoup d'amis en privé, ...), la teneur en chlore actif risque de passer en dessous du seuil minimal requis pour garantir un pouvoir désinfectant suffisant. Inversement, en cas de faibles fréquentations de nageurs, il va y avoir surchloration de l'eau de piscine. Il est par ailleurs connu que le chlore libre réagit avec les composés azotés (sueur, urée, ...) présents dans les eaux de baignade pour former des composés chloroaminés (regroupés généralement sous le terme de chlore combiné) en opposition à l'acide hypochloreux (appelé chlore libre ou chlore actif), entraînant des effets secondaires néfastes tels qu'odeurs désagréables et apportant à l'eau traitée un caractère irritant (toux, yeux rouges, ...). La surchloration de l'eau accentue ces phénomènes.

Par ailleurs, les teneurs minimales en chlorure de sodium recommandées généralement dans les différentes publications relatives à des procédés de traitement varient de 2 à 6 grammes de chlorure de sodium par litre. Ces teneurs sont incompatibles avec les législations en vigueur dans différents pays. En outre, une teneur aussi élevée en chlorure de sodium peut engendrer des problèmes de corrosion sur les équipements annexes de la piscine, tels que moteurs immergés, échangeurs de chaleur, échelles, etc. Enfin, les teneurs usuellement recommandées de 2 à 6 grammes de chlorure de sodium par litre donnent un goût salé à l'eau de piscine qui est parfois jugée désagréable par les utilisateurs.

L'agent désinfectant injecté ou produit par électrolyse est généralement l'hypochlorite de sodium qui se transforme en acide hypochloreux dans la fourchette de pH rencontrée (7,0 à 7,6), en remplacement ou en complément d'autres agents oxydants tels que le chlore liquide, gazeux, un de ses produits dérivés ou encore d'autres types d'agents oxydants tels que l'ozone ou l'eau oxygénée qui sont eux-mêmes soit injectés séparément, soit également produits sur place.

Il est par ailleurs connu (brevet GB1279020) que l'application d'un courant d'électrolyse sur une solution plus ou moins diluée de chlorure de sodium et à des tensions supérieures à 10 volts génère à la fois de l'acide hypochloreux et des radicaux oxygène qui se transforment quasi instantanément en produits peroxydés tels l'ozone ou le peroxyde d'hydrogène, voire d'autres composés peroxydés. Cependant les tensions supérieures à 10 volts aux courants de production considérés engendrent des puissances électriques importantes.

La complémentarité et la synergie entre ces deux types de produits provient de la différence entre leur réactivité: les produits peroxydés sont plus réactifs et donc plus efficaces en tant qu'agent désinfectant mais ont des durées de vie très courtes et ne permettent donc pas de garantir un effet rémanent dans la piscine. Les produits chlorés sont moins réactifs bien que leur efficacité ne soit pas mise en cause, mais permettent de maintenir un effet préventif rémanent dans les eaux de baignade nécessaire pour garantir la non-prolifération de bactéries, assurée par une teneur minimale en agent actif.

Le document GB1279020 décrit la nécessité de travailler à des tensions importantes par rapport au potentiel anodique de base correspondant aux teneurs en chlorure de sodium pour obtenir un ratio ozone/chlore important. Le fait de travailler à des tensions plus faibles engendre des ratios ozone/chlore plus faibles mais suffisants pour permettre un effet significatif sur l'élimination des chloramines. Par ailleurs, dans l'état de la technique, il est nécessaire d'utiliser des électrodes particulières revêtues d'un clad en platine (laminé), plus chères, pour pouvoir travailler jusqu'à 100 volts et à des densités de courant très élevées (jusqu'à 7750 ampères par mètre carré).

Par ailleurs encore, un ratio ozone/chlore trop important comporte le risque de voir des traces d'ozone dans le bassin, ce qui est souvent interdit par la législation.

Le procédé selon l'invention peut fonctionner pour le traitement d'une solution aqueuse dans un circuit ouvert, c'est-à-dire un circuit dans lequel l'eau à traiter ne passe qu'une seule fois entre les électrodes. Cela est par exemple le cas dans certains traitements de l'eau potable. Le procédé peut aussi fonctionner pour le traitement d'une solution aqueuse dans un circuit fermé, à savoir un circuit dans lequel la solution aqueuse passe plusieurs fois, comme par exemple en piscine ou dans les circuits d'eau de réfrigération. De tels circuits fermés comportent généralement des purges continues ou discontinues (contre-lavage des filtres, etc) et la solution purgée est alors remplacée par de la solution fraîche.

En outre, pour le traitement de l'eau potable, on peut concevoir une boucle relativement salée traitée par électrolyse et déversant une solution désinfectante en continue dans l'eau potable à traiter et réapprovisionnée en saumure fraîche. De tels circuits peuvent être considérés comme semi-ouverts ou semi-fermés. Le procédé selon l'invention s'applique à de tels circuits.

### Description détaillée de modes de réalisation particuliers

Le procédé selon l'invention est conçu pour réaliser une régulation automatique de la chloration de l'eau d'une piscine en fonction de divers paramètres tels que l'importance du nombre de nageurs fréquentant la piscine, la température de l'eau, les conditions climatiques, ainsi que tout autre facteur ayant une influence directe ou indirecte sur la consommation de l'agent oxydant utilisé pour le traitement désinfectant des eaux traitées, tout en optimisant la dose de solution oxydante nécessaire et suffisante pour garantir un effet rémanent et préventif contre la prolifération des bactéries, selon les normes en vigueurs dans les différentes régions.

L'installation comprend une ou plusieurs cellules d'électrolyse, dans lesquelles on produit de l'hypochlorite de sodium par électrolyse d'une solution aqueuse à faible teneur en chlorure de sodium, conforme aux réglementations en vigueur relatives aux bassins publiques et semi-publiques. Le cas échéant, le procédé peut également être utilisé dans des solutions aqueuses à teneur en chlorure de sodium plus élevée lorsque la réglementation le permet, comme dans le cas de piscines privées. Les cellules sont disposées dans le circuit principal de traitement de l'eau de la piscine, idéalement (bien que cela ne soit pas indispensable) en aval des unités de filtration et, le cas échéant, de l'installation de chauffage. Eventuellement, le procédé est couplé en série ou en parallèle avec un filtre contenant du charbon actif dans le but de créer une synergie avec ce dernier dans le traitement du chlore combiné et plus particulièrement des composés chloro-azotés appelés chloramines (trichloramine, dichloramine, monochloramine). Le procédé peut également être couplé en série ou en parallèle à tout autre procédé de traitement spécifique de ces mêmes composés, tel que le traitement par rayonnement ultraviolet, par injection de peroxyde d'hydrogène ou d'ozone, par électrolyse cuivre-argent (également appelée ionisation cuivre-argent).

L'installation se particularise par la conception des cellules d'électrolyse, leur disposition et leur mode d'exploitation. Les caractéristiques de l'installation sont les suivantes:
- les cellules d'électrolyse sont idéalement du type monopolaire, bien que le procédé s'applique également à d'autres configurations telle que bipolaire ou mixte (mono-bipolaire);
- les cellules d'électrolyse sont disposées dans le circuit principal de circulation de l'eau de la piscine et elles sont parcourues en continu par l'eau à traiter;
- l'anode et la cathode sont formées de plaques métalliques par exemple planes et rectangulaires, disposées parallèlement, de telle sorte que les plaques de l'anode alternent avec les plaques de la cathode ; les plaques constituant la cathode sont couplées en parallèle à une amenée de courant commune et les plaques constituant l'anode sont couplées en parallèle à une autre amenée de courant commune;
- les plaques constituant les deux électrodes sont du type Dimensionally Stable Anode (DSA, tel que décrit dans la famille du brevet GB1195871 du Dr Henry Beer);
- la distance anode-cathode est optimisée pour minimiser les chutes ohmiques dans l'électrolyte, à savoir inférieure à 5 millimètres, idéalement 1,5 millimètres;
- l'enceinte des cellules d'électrolyse est réalisée en matière plastique (polychlorure de vinyle) et peut avoir une forme tubulaire, dans le cas de cellules de petites dimensions;
- l'alimentation électrique des cellules d'électrolyse est conçue pour réaliser périodiquement une inversion des polarités des électrodes;
- la périodicité des inversions est ajustable et prédéterminée en fonction de la quantité de courant de production par unité de surface de l'interface actif entre les électrodes (interface d'électrolyse), calculée en A^{*}h/m² (ampère x heure par mètre carré);
- la densité de courant est réglée pour que la tension aux bornes des cellules n'excède pas 9 volts;
- chaque cellule est couplée à un redresseur individuel (bien que plusieurs cellules peuvent aussi être couplées en série ou en parallèle à un même redresseur);
- les redresseurs sont couplés en parallèle à une installation de régulation qui est conçue pour démarrer (ou arrêter) les cellules en cascade, chaque cellule opérant elle-même à une densité de courant (courant de production divisé par l'interface d'électrolyse) variable en fonction de la demande en chlore actif dans l'eau de la piscine; la demande en chlore actif est elle-même déterminée par une mesure de la teneur en chlore actif ou chlore libre dans le circuit principal de circulation de l'eau par rapport à une valeur de consigne (mesure du potentiel Redox ou autre mesure du chlore libre appropriée);
- l'appoint de sel nécessaire à la production électrolytique de l'hypochlorite de sodium est effectué au moyen d'une saumure que l'on prépare dans un circuit secondaire;
- le débit de saumure injectée dans le circuit principal est régulé au moyen d'une mesure de la conductivité électrique de l'eau du circuit principal;
- la conductivité (ou la résistivité) de l'eau est calculée par les données courant/tension du procédé même, en tenant compte d'une correction de température de l'eau ; la conductivité peut également être mesurée de manière plus classique par mesure de la résistivité ou de la conductivité de l'eau;
- en variante, l'appoint de sel peut être effectué pas introduction de sel solide directement dans la piscine, la teneur en sel étant mesurée soit par analyse, soit par mesure de la conductivité ou de la résistivité de l'eau; et
- la teneur en chlorure dans l'eau de la piscine est inférieure à 2000 ppm, idéalement comprise entre 600 et 800 ppm, dans le but de favoriser la cogénération de produits peroxydés tels que l'ozone ou le peroxyde d'hydrogène, via la formation de radicaux oxygène provenant de l'électrolyse simultanée de l'eau et du sel.

Ce type de procédé est applicable non seulement aux traitements des eaux de piscines privées ou publiques, mais également et de manière non limitative aux traitements des eaux de bassins de plaisance en général de type spa, jacuzzis, aux fontaines publiques, au traitement de l'eau potable en général, au traitement des eaux utilisées dans diverses industries telle que l'industrie alimentaire, au traitement d'effluents en général, au traitement contre les légionnelles de l'eau d'un circuit de réfrigération, ou de manière plus générale à toute application requérant une solution désinfectante.

En variante, le procédé peut fonctionner en mode manuel en ajustant le courant de production en fonction de la teneur en chlore actif ou libre mesurée par analyse colorimétrique ou par titrimétrie ou par tout autre type d'analyse ou de mesure, ou en anticipation du nombre de nageurs fréquentant la piscine ou de tout autre paramètre influençant la consommation de l'agent oxydant produit par le procédé.

Le procédé s'applique à la fois au traitement de l'eau en général, tant en circuits fermés (piscines, circuits d'eau de refroidissement dans l'industrie en général, fontaines publiques, circuits d'eau de traitement dans l'industrie alimentaire, ...) qu'en circuits ouverts comme le traitement de l'eau potable.

### Exemple 1

Le procédé a été installé dans le circuit principal de traitement de l'eau d'une piscine, en substitution d'un traitement classique par injection d'hypochlorite de sodium. La piscine est utilisée à des fins professionnelles et fréquentée par des groupes d'aquagym, des cours pour bébés nageurs, ainsi que par des personnes en soins de rééducation, dans les conditions suivantes:
- la fréquentation est de 100 personnes par jour en moyenne, chaque personne restant en moyenne une heure dans l'eau;
- la piscine est en service toute l'année, 6 jours sur 7;
- la température de l'eau est maintenue à 33°C;
- la piscine est située à l'intérieur d'un bâtiment fermé;
- la température de l'air ambiant est maintenue à 30°C;
- le circuit de traitement de l'eau comprend successivement une prise d'échantillon pour le contrôle en continu du pH et de la teneur en chlore libre mesuré par une électrode sélective, une injection de réactif pour ajuster le pH aux valeurs de consigne, une pompe de circulation, un premier filtre à sable, un deuxième filtre à charbon actif, un échangeur de chaleur, une cellule d'électrolyse; un automate gère simultanément la pompe d'injection de réactif pour la régulation du pH et le courant de production de la cellule d'électrolyse pour la régulation de la teneur en chlore libre;
- la teneur en chlorure est maintenue entre 600 et 800 ppm et est contrôlée par des analyses régulières;
- la teneur en chlorure de sodium est ajustée manuellement en introduisant directement le sel solide dans la piscine;
- la consommation en sel est de l'ordre de 8 à 10 kilogrammes par semaine;
- la pompe est en fonctionnement 24 heures sur 24, 7 jours sur 7;
- les électrodes sont de type Dimensionally Stable Anode (DSA) et sont connectée électriquement en configuration monopolaire;
- chaque électrode est constituée de 16 plaques rectangulaires de 30 millimètres sur 300 millimètres;
- l'interface inter-électrodes est donc de 0,135 mètres carrés;
- l'écartement entre les électrodes est de 1,5 mm;
- le courant de production varie de 0 à 80 ampères selon la demande de production gérée par l'automate de régulation;
- la densité de courant varie de 0 à 590 ampères par mètre carré;
- la tension de production varie de 4 à 6 volts; et
- l'inversion de polarité a été programmée pour une inversion tous les 50 ampères heure correspondant à 370 ampères heure par mètre carré.

Après trois mois de fonctionnement, les résultats sont les suivants :
- la teneur en chlore libre est régulée et maintenue entre 0,6 et 0,9 ppm;
- la teneur en chlore combinée est de 0,4 +/- 0,1 ppm, soit une diminution de 0,2 ppm par rapport au traitement classique par injection d'hypochlorite de sodium, tout autre paramètre étant resté égal;
- aucune odeur de chlore et aucun goût de sel détectable;
- la consommation électrique est de 2,5 kilowatt heure par jour en moyenne, amenant une économie substantielle par rapport au traitement au moyen de réactifs classiques; et
- la consommation en acide chlorhydrique pour la régulation du pH a été réduite de l'ordre de 20% par rapport au traitement à l'hypochlorite de soude.

### Exemple 2

Le procédé a été installé dans le circuit principal de traitement de l'eau d'une piscine, en substitution d'un traitement classique par addition de chlore stabilisé (pastilles d'acide trichloroisocyanurique). La piscine est utilisée à des fins privées, dans les conditions suivantes:
- la fréquentation est de quelques personnes par jour en moyenne, uniquement pendant la période estivale
- la température de l'eau varie de quelques degrés en hiver à environ 30°C en été;
- la piscine est située en plein air;
- le circuit de traitement de l'eau comprend successivement une pompe de circulation, un filtre à sable, un échangeur de chaleur, une cellule d'électrolyse;
- la teneur en sel est maintenue entre 1000 et 2000 ppm et est contrôlée par un conductivimètre portable;
- la teneur en sel est ajustée manuellement en introduisant directement le sel solide dans la piscine;
- la consommation en sel est de l'ordre de 25 à 50 kilogrammes par an;
- la pompe est en fonctionnement 12 heures par jour durant la période estivale et de 4 heures par jour durant la période hivernale;
- les électrodes sont de type Dimensionally Stable Anode (DSA) et sont connectée électriquement en configuration monopolaire;
- chaque électrode est constituée de 8 plaques rectangulaires de 25 millimètres sur 250 millimètres;
- l'interface inter-électrodes est donc de 0,044 mètre carré;
- l'écartement entre les électrodes est de 3,0 mm;
- le courant de production varie de 0 à 20 ampères selon la demande de production et est ajustée manuellement en tenant compte de la température de l'eau, de la fréquentation de la piscine et de la concentration en chlore libre;
- la densité de courant varie de 0 à 450 ampères par mètre carré;
- la tension de production varie de 3,5 à 5,5 volts; et
- l'inversion de polarité a été programmée à une inversion tous les 15 ampères heure, correspondant à 340 ampères heure par mètre carré.

Après un an de fonctionnement, les résultats sont les suivants :
- la teneur en chlore libre est régulée et maintenue entre 1 et 1,5 ppm;
- la teneur en chlore combinée est de 0,4 +/- 0,1 ppm; et
- aucune odeur de chlore et aucun goût de sel détectable.

Le procédé et l'électrolyseur selon l'invention peuvent fonctionner avec d'autres halogènes tels que le brome ou d'autres métaux tels que le potassium (chlorure de potassium) ou le calcium (chlorure de calcium).

L'homme du métier comprendra que l'invention peut être utilisée avec des électrodes planes ou concentriques par exemple.

Les électrodes peuvent être monopolaires ou bipolaires. En monopolaire, chaque électrode ne constitue qu'un seul pole, soit anodique, soit cathodique et ne s'y produit donc à sa surface que des réactions de type soit anodiques, soit cathodiques. De telles cellules ne comportent que deux électrodes, une anode et une cathode.

Une électrode bipolaire est une électrode se trouvant à un potentiel intermédiaire entre une électrode à un potentiel plus élevé et une autre électrode à un potentiel plus faible, de sorte que ladite électrode agit simultanément comme une anode sur la partie en vis-à-vis de l'électrode à potentiel inférieur et comme une cathode sur la partie en vis-à-vis de l'autre. Dans le cas d'électrodes planes, des réactions de type anodiques s'y produisent sur une face et de type cathodique sur l'autre face.

## Revendications

1. Procédé de traitement d'une solution aqueuse comprenant du sel halogéné, et en plus particulier du chlorure de sodium, et contenue dans un réservoir, telle une piscine, ou dans un circuit comprenant
une étape d'électrolyse, entre des électrodes espacées l'une de l'autre d'une distance donnée, de la solution aqueuse produisant simultanément des dérivés chlorés et des dérivés oxygénés,
**caractérisé en ce que**
(i) la teneur en sel halogéné dans la solution aqueuse est maintenue à une valeur inférieure à 2000 ppm;
(ii) la tension appliquée aux bornes des électrodes est comprise entre 2,35 et 9 volts; et
(iii) la distance entre les bornes des électrodes est inférieure à 5 millimètres.

2. Procédé selon la revendication 1, dans lequel la distance entre les bornes des électrodes est inférieure à 3 millimètres.

3. Procédé selon la revendication 2, dans lequel la distance entre les bornes des électrodes est comprise entre 1 et 3 millimètres, et en plus particulier comprise entre 1 et 2 millimètres.

4. Procédé selon l'une quelconque des revendications précédentes, dans lequel le courant d'électrolyse est régulé en fonction d'une mesure de la teneur en chlore dans le réservoir ou le circuit, de telle manière à réguler automatiquement la teneur en chlore dans le réservoir ou le circuit.

5. Procédé selon l'une quelconque des revendications précédentes, dans lequel les électrodes utilisées dans l'étape d'électrolyse sont de type Dimensionally Stable Anode (DSA).

6. Procédé selon l'une quelconque des revendications précédentes, comprenant une étape de filtration au moyen d'un filtre à charbon actif.

7. Procédé selon l'une quelconque des revendications précédentes, comprenant une étape de traitement complémentaire de la solution aqueuse par rayonnement ultraviolet, par injection de peroxyde d'hydrogène, par injection d'ozone ou par électrolyse cuivre-argent.

8. Procédé selon l'une quelconque des revendications précédentes, appliqué à un réservoir, telle une piscine, dans lequel l'électrolyse a lieu dans le circuit principal de circulation de l'eau du réservoir.

9. Electrolyseur pour le traitement d'une solution aqueuse comprenant du sel halogéné, tel du chlorure de sodium, et contenue dans un réservoir, telle une piscine, ou dans un circuit comprenant
des moyens de réalisation d'une électrolyse de la solution, comprenant des électrodes dont les bornes sont espacées l'une de l'autre d'une distance donnée, apte à entraîner la production simultanée de dérivés chlorés et des dérivés oxygénés;
**caractérisé en ce que**
(i) la teneur en sel halogéné dans la solution aqueuse est maintenue à une valeur inférieure à 2000 ppm;
(ii) la tension appliquée aux bornes des électrodes est comprise entre 2,35 et 9 volts; et
(iii) la distance entre les bornes des électrodes est inférieure à 5 millimètres.

10. Electrolyseur selon la revendication 9, dans lequel la distance entre les bornes des électrodes est inférieure à 3 millimètres.

11. Electrolyseur selon la revendication 10, dans lequel la distance entre les bornes des électrodes est comprise entre 1 et 3 millimètres, et en plus particulier comprise entre 1 et 2 millimètres.

12. Electrolyseur selon l'une quelconque des revendications 9 à 11, dans lequel le courant d'électrolyse est régulé en fonction d'une mesure de la teneur en chlore dans le réservoir ou le circuit, de telle manière à réguler automatiquement la teneur en chlore dans le réservoir ou le circuit.

13. Electrolyseur selon l'une quelconque des revendications 9 à 12, dans lequel les électrodes utilisées dans l'étape d'électrolyse sont de type Dimensionally Stable Anode (DSA).

14. Electrolyseur selon l'une quelconque des revendications 9 à 13, comprenant un filtre à charbon actif.

15. Electrolyseur selon l'une quelconque des revendications 9 à 14, comprenant de moyens de traitement complémentaire de la solution aqueuse par rayonnement ultraviolet, par injection de peroxyde d'hydrogène, par injection d'ozone ou par électrolyse cuivre-argent.

16. Réservoir comprenant un électrolyseur selon l'une quelconque des revendications 9 à 15, l'électrolyseur étant disposé dans le circuit principal de circulation de l'eau du réservoir.
